# EUROPÄISCHE PATENTANMELDUNG

(11) **EP 1 584 893 A1**
(43) Veröffentlichungstag der Anmeldung: **12.10.2005**
(21) Anmeldenummer: 05450056.6
(22) Anmeldetag: 24.03.2005
(51) Int. Cl.: G01B 11/02, G01N 21/71, G01N 21/63

(54) **Verfahren zur Ermittlung und Korrektur bzw. Regelung des Verlaufs eines laserlichtstrahls in einem Hohlkörper**

(30) Priorität: 30.03.2004 AT 5652004
(71) Anmelder: Innsitec Laser Technologies GmbH, 4020 Linz (AT)
(72) Erfinder: Gruber, Johann, 4921 Hohenzell (AT)
(74) Vertreter: Wildhack, Helmut

(57) **Zusammenfassung**

Die Erfindung betrifft ein Verfahren zur Ermittlung und Korrektur bzw. Regelung des Verlaufs eines Laserlichtstrahls relativ zu einem Hohlkörper, in welchem der Laserlichtstrahl geführt wird, insbesondere bei Durchführung von Laserinduzierter-Plasma-Spektroskopie. Um Abweichungen des Verlaufes eines Laserlichtstrahls im Hohlkörper von einem gewünschten Verlauf einfach und zuverlässig auch während eines Messbetriebes feststellen und korrigieren zu können, ist gemäß der Erfindung vorgeschlagen, dass koaxial zum Laserlichtstrahl ein Bild einer Lichteintrittsöffnung und/oder einer Lichtaustrittsöffnung des Hohlkörpers bzw. einer im Hohlkörper befindlichen Substanz vollumfänglich aufgenommen und aus einer Stellung von Lichteintrittsöffnung und Lichtaustrittsöffnung bzw. Substanzoberfläche im Bild der Verlauf des Laserstrahls im Hohlkörper relativ zu diesem ermittelt und gegebenenfalls korrigiert bzw. nachgeregelt wird.

## Beschreibung

Die Erfindung betrifft ein Verfahren zur Ermittlung und Korrektur bzw. Regelung des Verlaufs eines Laserlichtstrahls relativ zu einem Hohlkörper, in welchem der Laserlichtstrahl geführt wird, insbesondere bei Durchführung von Laserinduzierter-Plasma-Spektroskopie.

Laser-induzierte-Plasma-Spektroskopie (kurz: LIPS) ist eine äußerst leistungsstarke spektroskopische Methode zur präzisen Bestimmung der chemischen Zusammensetzung von Stoffen beliebigen Aggregatzustandes. Bei dieser Methode wird ein Laserlichtstrahl hoher Intensität auf einen zu untersuchenden Stoff geführt, um auf einer Oberfläche des Stoffes ein Plasma zu zünden bzw. zu unterhalten und eine vom Plasma emittierte Strahlung wird spektral analysiert. Über eine spektrale Analyse bzw. die Emissionslinien einzelner im Plasma vorhandener Elemente kann eine chemische Zusammensetzung des Stoffes bestimmt werden.

Bei einer Durchführung von LIPS an festen oder flüssigen Stoffen, insbesondere Metallschmelzen, wird häufig zum Schutz optischer Komponenten und zur Einstellung einer gewünschten Atmosphäre während einer Messung ein Hohlkörper eingesetzt, welcher unmittelbar an den zu spektroskopierenden Stoff angestellt wird und welcher eine Lichteintrittsöffnung für einen Laserlichtstrahl aufweist. Ein Laserlichtstrahl kann dann durch den Hohlkörper auf das Untersuchungsmaterial geführt und dabei der Hohlkörper mit Gas gespült werden, so dass an einer Stoffoberfläche eine definierte Atmosphäre herrscht. Dabei wirkt der Hohlkörper gleichzeitig quasi als Staubfänger, da er in zweckmäßiger Weise verhindert, dass durch den Laserlichtstrahl ablatiertes Material und aufgewirbelter Staub optische Komponenten einer LIPS-Vorrichtung verschmutzen.

Im Falle von LIPS-Untersuchungen an Metallschmelzen haben gasgespülte Hohlkörper auch die Funktion, durch eine Schlacke hindurch einen freien Zugang zur Metallschmelze zu schaffen, so dass diese spektroskopisch untersucht werden kann. Alternativ ist ein Zugang zur Metallschmelze auch ermöglicht, wenn ein Hohlkörper durch die feuerfeste Auskleidung eines metallurgischen Gefäßes geführt wird. Solcherart eingesetzte Hohlkörper sind dem Fachmann unter dem Begriff Unterbaddüsen geläufig.

Wenngleich mit einer Verwendung von Hohlkörpern teure optische Komponenten geschützt werden können und eine Untersuchung vieler metallischer Schmelzen überhaupt erst ermöglicht wird, kann ein Einsatz von Hohlkörpern auch, wie die Erfinder erkannt haben, Ursache für Messprobleme sein. Während einer Messung kann sich nämlich eine Position des Laserlichtstrahls relativ zum Hohlkörper ändern, so dass der Laserlichtstrahl beispielsweise teilweise oder ganz auf eine innere Oberfläche des Hohlkörpers trifft. In der Folge erreicht der Laserlichtstrahl nicht mehr mit gewünschter Laserlichtleistung eine Probenoberfläche und eine konstante Laserlichtleistung an der Schmelzenoberfläche ist nicht mehr gegeben. Da eine Plasmaemission auch von der Laserlichtleistung an einer Stoffoberfläche abhängt, können korrekte Messergebnisse konsequenterweise nicht erhalten werden.

Das vorstehend dargelegte Problem ist insbesondere bei einer Untersuchung metallischer Schmelzen, beispielsweise mit Hilfe zylindrischer Unterbaddüsen, gegeben, weil die eingesetzten Hohlkörper eine große Länge von etwa 100 bis 140 Zentimeter aufweisen, um durch eine Schlacke oder eine Wand eines metallischen Gefäßes zu dringen, dabei jedoch nur kleine Durchmesser von etwa 1 cm haben, weil ein erforderlicher Gasfluss gering gehalten werden soll. Geringste Änderungen im Verlauf eines Laserlichtstrahls relativ zum Hohlkörper bzw. zu einer Unterbaddüse, beispielsweise durch thermische Einflüsse und/oder mechanischen Erschütterungen auf eine Position optischer Komponenten wie Prismen oder Spiegel, können deswegen große Auswirkungen auf das Messergebnis haben.

Um im Rahmen von Untersuchungen mittels LIPS und bei Verwendung von Hohlkörpern oder Unterbaddüsen korrekte Messergebnisse zu erhalten, ist es erforderlich, dass ein Laserlichtstrahl während einer Messung hochpräzise durch den Hohlkörper geführt werden kann. Dies wiederum setzt voraus, dass der Verlauf eines Laserlichtstrahls relativ zum Hohlkörper mit hoher Genauigkeit rasch ermittelbar ist, was bislang nicht in einfacher Weise möglich ist.

Hier knüpft die Erfindung an und setzt sich zum Ziel, ein Verfahren der eingangs genannten Art anzugeben, mit dem in einfacher und zuverlässiger Weise ein Verlauf eines Laserlichtstrahls in einem Hohlkörper ermittelt werden kann, so dass während eines Messbetriebes Abweichungen von einem Idealverlauf eines Laserlichtstrahls relativ zum Hohlkörper erkennbar und korrigierbar sind.

Dieses Ziel wird durch ein Verfahren nach Anspruch 1 erreicht. Vorteilhafte Weiterbildungen eines erfindungsgemäßen Verfahrens sind Gegenstand der Ansprüche 2 bis 7.

Die mit der Erfindung erzielten Vorteile sind insbesondere darin zu sehen, dass in einfacher Weise eine Abweichung von einem idealen Strahlengang des Laserlichtstrahls im Hohlkörper feststellbar ist. Auf Grund einer Koaxialität von Laserlicht und Licht für eine Bildaufnahme erfolgt eine Aufnahme exakt in Richtung des Laserlichtstrahls und im Bild ist dieser genau im Zentrum lokalisiert. Ein ausschließlich lateraler Versatz des Hohlkörpers zum Laserlichtstrahl bzw. umgekehrt zeigt sich im Bild daher einfach dadurch, dass eine Lichteintrittsöffnung nicht rotationssymmetrisch zum Bildmittelpunkt liegt. Ist andererseits eine koinzidente Führung von Laserlichtstrahl zur Hohlkörperachse gegeben, tritt aber eine Verkippung des Hohlkörpers relativ zum Laserlichtstrahl auf, so äußert sich dies im aufgenommen Bild unmittelbar dadurch, dass Lichteintrittsöffnung und Lichtaustrittsöffnung des Hohlkörpers nicht beide rotationssymmetrisch zum Bildmittelpunkt, also dem Laserlichtstrahl, liegen. Analog kann eine Kombination von lateraler Fehlstellung und Verkippung erkannt werden, weil solchenfalls Lichteintrittsöffnung und Lichtaustrittsöffnung weder zum Bildmittelpunkt noch zueinander rotationssymmetrisch um eine Achse liegen.

Vorteilhafterweise wird aus einer Stellung und Größe von Lichteintrittsöffnung sowie Lichtaustrittsöffnung im Bild das exakte Ausmaß einer Abweichung ermittelt, so dass ein Winkel zwischen Laserlichtstrahl und einer Hohlkörperachse bekannt wird und der relative Verlauf des Laserlichtstrahls im Hohlkörper genau korrigiert werden kann.

Da das Verfahren parallel zu einem Messbetrieb erfolgen kann, ist es nunmehr möglich, allfällige Fehlstellung von Laserlichtstrahl relativ zum Hohlkörper sofort zu korrigieren und so eine Voraussetzung für korrekte Messergebnisse zu schaffen. Ein Laserlichtstrahl kann somit während eines Messbetriebes relativ zum Hohlkörper stets in einer optimalen Position geführt werden.

Wird eine flüssige oder pulverförmige Substanz untersucht und füllt diese den Hohlkörper teilweise, so wird anstelle einer Lichtaustrittsöffnung die Substanzoberfläche vollumfänglich für die gleichen Zwecke im Bild festgehalten.

Um ein möglichst gutes Bild von Lichteintrittsöffnung als auch Lichtaustrittsöffnung, vor allem bei Hohlkörpern mit großer Längserstreckung, zu erhalten, ist es günstig, wenn der Hohlkörper innen beleuchtet wird. Insbesondere kann dann bei teilweiser Befüllung des Hohlkörpers mit nicht leuchtenden Substanzen wie eine Metallschmelze, welche keine Strahlung emittiert, ein klares Bild einer Substanzoberfläche aufgenommen werden.

Bewährt hat es sich, wenn zur Aufnahme eines Bildes im Strahlengang des Laserlichtstrahls ein halbdurchlässiger Spiegel im Brewster-Winkel angeordnet wird und mit diesem Spiegel Licht einer Kamera zugeführt wird. So kann in einfacher Weise gleichzeitig eine zum Laserlichtstrahl koaxiale Aufnahme getätigt und p-polarisiertes Laserlicht verlustfrei oder zumindest verlustarm über die hierfür im Strahlengang vorgesehen Komponenten geleitet werden.

Im Zusammenhang damit hat es sich als vorteilhaft erwiesen, wenn in Blickrichtung der Kamera eine lichtabsorbierende Einrichtung dem halbdurchlässigen Spiegel nachgeordnet wird. Störsignale, welche aus einem der Kamera abgewandten Spiegelbereich auf die Kamera fallen können, können dann weitgehend eliminiert bzw. vermieden werden.

Sehr zweckmäßig ist es, wenn der Laserlichtstahl mittels optischer Komponenten wie Prismen oder Spiegel zum Hohlkörper geleitet und mittels derselben Komponenten Licht aus dem Bereich des Hohlkörpers zu einer Kamera geleitet wird. Bei dieser Verfahrensweise können Laser, Kamera und andere empfindliche und teure optische Geräte in sicherer Entfernung vom Messort aufgestellt werden.

In einer besonders vorteilhaften Weiterbildung eines erfindungsgemäßen Verfahrens wird aus einem Größenverhältnis von Lichteintrittsöffnung zu Lichtaustrittsöffnung bzw. Substanzoberfläche im Bild ein Abstand der dazu korrespondierenden Positionen im Hohlkörper ermittelt.

Insbesondere bei einer Durchführung von LIPS an Metallschmelzen kann so ein Füllstand im Hohlkörper und somit auch eine Entfernung von einer Fokussiereinrichtung zur Oberfläche der Metallschmelze bestimmt werden. Diese Abstandsbestimmung ist insofern von besonderer Bedeutung, als dass bei Änderung dieses Abstands auch eine Laserlichtleistungsdichte an der Schmelzenoberfläche geändert wird. Nunmehr ist es möglich, Variationen des genannten Abstandes rasch zu erkennen und bei Bedarf die Laserlichtleistung oder Leistungsdichte an der Schmelzenoberfläche nachzuregeln, so dass während einer gesamten Messung konstante Leistungsdichte und ein stabiles bzw. reproduzierbares Plasma verfügbar sind.

Eine besonders genaue Ermittlung des Verlaufes des Laserlichtstrahls relativ zum Hohlkörper bei gleichzeitig präziser Ermittlung eines Abstandes von Lichteintrittsöffnung zu einer im Hohlkörper befindlichen Substanz, beispielsweise eine Metallschmelze, ist gegeben, wenn das Bild mittels Mustererkennung bzw. digitaler Bildverarbeitung ausgewertet wird.

Weitere Vorteile der Erfindung ergeben sich aus dem Zusammenhang der Beschreibung und den im Folgenden dargelegten Beispielen.

Die Erfindung ist nachstehend anhand von Figuren noch weitergehend erläutert.

Es zeigen
Figur 1: eine LIPS-Vorrichtung zur Untersuchung von metallischen Schmelzen;
Figur 2a: idealer Verlauf eines Laserlichtstrahls in einem Hohlkörper;
Figur 2b: nicht-idealer Verlauf eines Laserlichtstrahls in einem Hohlkörper;
Figur 2c: idealer Verlauf eines Laserlichtstrahls in einem Hohlkörper bei einem niedrigeren Füllstand im Hohlkörper als in Figur 2a;
Figur 3a: ein Bild bei einer Situation ähnlich Figur 2a;
Figur 3b: ein Bild bei einer Situation ähnlich Figur 2b;
Figur 3c: ein Bild bei einer Situation ähnlich Figur 2c.

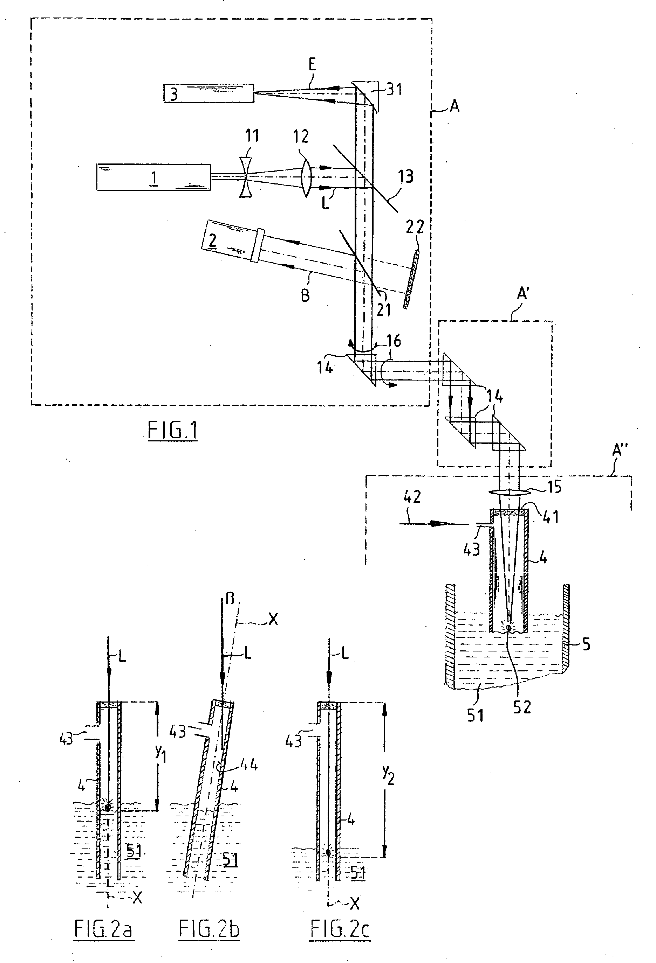

In Figur 1 ist eine LIPS-Vorrichtung zur Untersuchung metallischer Schmelzen näher dargestellt. Eine Laserlichtquelle **1,** zum Beispiel ein gepulster Nd:YAG-Laser, erzeugt einen Laserlichtstrahl **L,** dessen Durchmesser mit einem Linsensystem bestehend aus einer Zerstreuungslinse **11** und einer Sammellinse **12** auf einen gewünschten Wert eingestellt wird. Ein halbdurchlässiger Spiegel **13** lenkt den Laserlichtstrahl **L** einem Strahlführungssystem mit mehreren Prismen **14** zu. Die Prismen **14** sind relativ zueinander drehbar und/oder verschiebbar gelagert, wie durch Pfeile **16** angedeutet. Dadurch ist das Strahlführungssystem flexibel und der Laserlichtstrahl **L** ist in beliebige Richtungen lenkbar. Eine weitere Sammellinse **15** oder ein fokussierender Spiegel ist vorgesehen, um den Laserlichtstrahl **L** auf die Oberfläche einer metallischen Schmelze **51** zu fokussieren, so dass die für eine Zündung eines Plasmas **52** erforderliche Laserlichtleistung erreicht wird. Die Sammellinse **15** ist unmittelbar vor der Probe vorgesehen; so kann das Laserlicht mit einem weiten Strahldurchmesser und daher schonend über Prismen **14** geführt werden und die Bündelung erfolgt erst vor der Probe.

Wie aus Figur 1 weiter ersichtlich, ist ein Hohlkörper **4** vorgesehen, welcher in eine Metallschmelze **51** eintaucht, die sich in einem metallurgischen Gefäß **5,** beispielsweise ein Konverter, befindet. In Richtung **42** wird durch eine Eintrittsöffnung **43** Gas in den Hohlkörper **4** eingeblasen, wodurch eine stabile Schmelzenoberfläche geschaffen wird. Weiters wird dadurch verhindert, dass Probenmaterial optische Komponenten des Strahlführungssystems verschmutzt. Der Hohlkörper **4** und die Sammellinse **15** sind zueinander so angeordnet, dass über die Sammellinse **15** ein Laserlichtstrahl **L** durch eine Lichteintrittsöffnung **41** eines Hohlkörpers **4** hindurch auf die Schmelzenoberfläche fokussierbar ist.

Vom Plasma **52** emittierte Strahlung **E** wird über dieselben Prismen **14,** welche auch zum Hinführen des Laserlichtstrahls **L** zur Schmelze **51** verwendet werden, zu einem Spiegel **31** geführt, der Strahlung **E** einem Spektrometer **3** zuführt. Mit dem Spektrometer **3,** beispielsweise ein wellenlängendispersives Gitterspektrometer, erfolgt eine Analyse der emittierten Strahlung **E.** Aus den Intensitäten einzelner Plasmalinien kann in der Folge die chemische Zusammensetzung einer Schmelze **51** bestimmt werden.

Weiters wird ebenfalls mit Prismen **14** Licht **B** aus dem Bereich des Hohlkörpers **4** einer Kamera **2** zugeführt, wobei ein halbdurchlässiger Spiegel **21** in Bezug auf den Laserlichtstrahl **L** im Brewster-Winkel angeordnet ist. Für einen p-polarisierten Laserlichtstrahl **L** ist der halbdurchlässiger Spiegel **21** auf Grund der getroffenen Anordnung völlig transparent.

Mit Vorteil ist der halbdurchlässige Spiegel **21** aus Quarz, Suprasil, CaF₂ oder MgF₂ gefertigt, weil diese Materialien für die emittierte Strahlung **E** transparent sind und daher das Messsignal intensitätsmäßig nicht beeinträchtigt wird.

Um Störsignale möglichst zu vermeiden, ist in Blickrichtung der Kamera **2** eine absorbierende Platte **22** dem Spiegel **21** nachgeordnet. Günstig ist es weiters auch, wenn unmittelbar vor der Kamera **2** schmalbandige Filter zur Ausblendung von Streulicht oder Reflexen von Laserlicht angeordnet sind, weil auf Grund der hohen Laserlichtleistung selbst Streulichtanteile ausreichen können, um eine Kamera zu sättigen.

Da dieselben Prismen **14** zur Führung des Laserlichtstrahls **L** und zur Führung von Licht aus dem Hohlraum **4** bzw. vom Bereich einer Lichteintrittsöffnung **41** zur Kamera **2** verwendet werden, sind die jeweiligen Strahlengänge kollinear bzw. koachsial. Ändert sich die Position des Laserlichtstrahls **L** relativ zum Hohlkörper **4,** so ändert sich auch ein mit der Kamera aufgenommenes Bild.

Wie außerdem aus Figur 1 ersichtlich, ist ein erster Teil der Vorrichtung ist in einem Bereich **A** untergebracht, beispielsweise integriert in einem Gehäuse, welches in sicherer Entfernung zu einem im Bereich **A"** befindlichen Messort, aufgestellt werden kann. Durch ein Strahlführungssystem im Bereich **A',** beispielsweise eine Anordnung mehrerer zueinander verschiebbarer und/oder drehbarer Prismen **14,** welche in hohlen Strahlarmen angeordnet sein können,kann Licht zwischen den Bereichen **A** und **A"** transportiert werden.

Prismen **14** und Strahlarme im Bereich **A'** sind mechanischen Erschütterungen und hohen Temperaturen ausgesetzt, wodurch es zu einer Abweichung der gewünschten relativen Position von Laserlichtstrahl **L** zu Hohlkörper **4** kommen kann.

In den Figuren 2a und 2b sind schematisch Auswirkungen einer derartigen Abweichung dargestellt. Während in Figur 2a ein Laserlichtstrahl **L** in idealer Weise zentral und entlang einer Achse **X** des Hohlkörpers **4** In Richtung auf eine Oberfläche einer Schmelze **51** verläuft und auf der Oberfläche ein Plasma zündet, ist in Figur 2b eine Verkippung zwischen Laserlichtstrahl **L** und Hohlkörper **4** mit einem Winkel β gegeben. Der Laserlichtstrahl **L** trifft daher nicht in gewünschter Weise auf einer Schmelzenoberfläche auf.

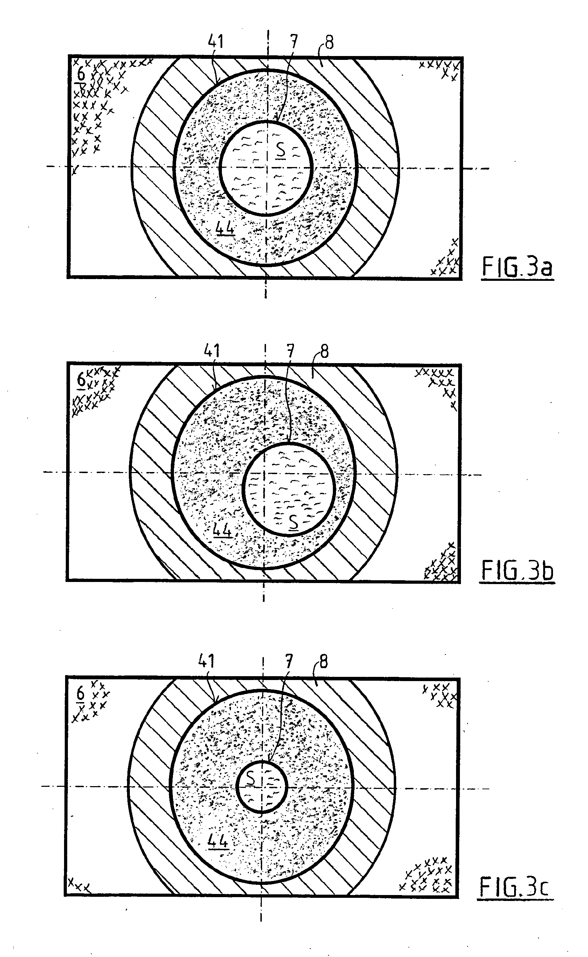

Wie in den Figuren 3a und 3b näher dargestellt ist, kann eine derartige Abweichung eines Laserlichtstrahl **L** von einer Idealposition nunmehr einfach im Bild festgestellt werden kann. Figur 3a zeigt ein Bild wie es bei einem idealen Verlauf des Laserlichtstrahls **L** in einem zylindrischen Hohlkörper **4** erhalten wird. Dies entspricht einer Lage, wie sie in Figur 2a schematisch dargelegt ist. Eine Aufnahme von Lichteintrittsöffnung **41,** Innenwand **44,** Schmelzenoberfläche **S** und Umfang **7** der sichtbaren Schmelzenoberfläche **S** erfolgt kollinear bzw. koachsial zum Laserlichtstrahl **L,** also gleichsam aus Sicht desselben. Bei Bedarf können auch noch weitere Komponenten im Bild festgehalten werden, es ist jedoch für die Zwecke der Erfindung ausreichend, den zentralen Bereich eines Flansches **8** aufzunehmen und andere Bereiche auszublenden, welche im Bild als Fläche **6** erscheinen.

Eine Lichteintrittsöffnung **41** und eine sichtbare Schmelzenoberfläche **S** sind im Bild der Figur 2a als Kreise sichtbar, welche konzentrisch zu einer im Zentrum des Bildes liegenden Achse eines Laserlichtstrahls **L** liegen und somit eine optimal zentrale Lage eines Laserlichtstrahles **L** zu einem zylindrischen Hohlkörper **4** ausweisen. Sind Laserlichtstrahl **L** und Hohlraumachse **X** zu einander parallel, so reicht es zur Feststellung lateraler Abweichungen aus, lediglich die Lichteintrittsöffnung **41** oder vollumfänglich die Schmelzenoberfläche **S** zu beobachten.

Ergibt sich nun eine Abweichung von einer Idealposition, beispielsweise in Figur 2b schematisch dargestellt, so kann dies anhand eines Bildes sofort erkannt werden. Figur 3b zeigt, dass bei einer Verkippung des Hohlkörpers **4** ein Kreis **7** abseits des Bildzentrums lokalisiert ist. Aus der Stellung des Kreis **7** relativ zur Lichteintrittöffnung **41** im Bild und dem Abstand von Lichteintrittsöffnung **41** zur Schmelzenoberfläche **S** kann ein Winkel β berechnet werden, der einer Abweichung von Laserlichtstrahl **L** zu Hohlraumachse **X** entspricht.

Anhand der Figuren 2a und 3a bzw. 2c und 3c ist noch weiter eine Verfolgung der Änderung einer Füllhöhe im Hohlkörper **4** bei einem gewünschten Verlauf des Laserlichtstrahls **L** dargestellt. Sinkt ein Schmelzenpegel. im Hohlkörper **4** und ändert sich demgemäß ein Abstand **y**_{**1**} von Schmelzenoberfläche **S** zu Lichteintrittsöffnung nach **y**_{**2**}**,** so wird die sichtbare Schmelzenoberfläche **S** im Bild kleiner.

Bei entsprechender Eichung kann aus der Größe der Lichteintrittsöffnung **41** und der Schmelzenoberfläche **S** im Bild ein Abstand **y**_{**1**} bzw. **y**_{**2**} präzise errechnet werden. Damit ist auch ein Abstand zu einer. Fokussiereinrichtung bzw. Sammellinse **15** ermittelbar, welcher entscheidenden Einfluss auf eine Leistung des Laserlichtstrahls **L** an der Schmelzenoberfläche **S** und somit auf ein Messergebnis hat. Wird eine Abweichung von einem Sollwert des Abstandes festgestellt, so kann diese durch gegebenenfalls automatische Nachregelung korrigiert werden.

## Patentansprüche

1. Verfahren zur Ermittlung und Korrektur bzw. Regelung des Verlaufs eines Laserlichtstrahls relativ zu einem Hohlkörper, in welchem der Laserlichtstrahl geführt wird, insbesondere bei Durchführung von Laser-induzierter-Plasma-Spektroskopie, **dadurch gekennzeichnet, dass** koaxial zum Laserlichtstrahl ein Bild einer Lichteintrittsöffnung und/oder einer Lichtaustrittsöffnung des Hohlkörpers bzw. einer im Hohlkörper befindlichen Substanz vollumfänglich aufgenommen und aus einer Stellung von Lichteintrittsöffnung und/oder Lichtaustrittsöffnung bzw. Substanzoberfläche im Bild der Verlauf des Laserstrahls im Hohlkörper relativ zu diesem ermittelt und gegebenenfalls korrigiert bzw. nachgeregelt wird.

2. Verfahren nach Anspruch 1, **dadurch gekennzeichnet, dass** der Hohlkörper innen beleuchtet wird.

3. Verfahren nach Anspruch 1 oder 2, **dadurch gekennzeichnet, dass** zur Aufnahme eines Bildes im Strahlengang des Laserlichtstrahls ein halbdurchlässiger Spiegel im Brewster-Winkel angeordnet wird und mit diesem Spiegel Licht einer Kamera zugeführt wird.

4. Verfahren nach Anspruch 3, **dadurch gekennzeichnet, dass** in Blickrichtung der Kamera eine lichtabsorbierende Einrichtung dem halbdurchlässigen Spiegel nachgeordnet wird.

5. Verfahren nach einem der Ansprüche 1 bis 4**, dadurch gekennzeichnet, dass** der Laserlichtstahl mittels optischer Komponenten wie Prismen oder Spiegel zum Hohlkörper geleitet und mittels derselben Komponenten Licht aus dem Bereich des Hohlkörpers zu einer Kamera geleitet wird.

6. Verfahren nach einem der Ansprüche 1 bis 5, **dadurch gekennzeichnet, dass** aus einem Größenverhältnis von Lichteintrittsöffnung zu Lichtaustrittsöffnung bzw. Substanzoberfläche im Bild ein Abstand der dazu korrespondierenden Positionen im Hohlkörper ermittelt wird.

7. Verfahren nach einem der Ansprüche 1 bis 6, **dadurch gekennzeichnet, dass** das Bild mittels Mustererkennung bzw. digitaler Bildverarbeitung ausgewertet wird.
